# EUROPEAN PATENT SPECIFICATION

(11) **EP 1 413 161 B1**
(45) Date of publication and mention of the grant of the patent: **26.11.2008**
(21) Application number: 02743444.8
(22) Date of filing: 16.07.2002
(51) Int. Cl.: H04Q 7/38

(54) **SYSTEM, METHOD AND SMART CARD FOR ACCESSING A PLURALITY OF NETWORKS**
SYSTEM, VERFAHREN UND CHIP-KARTE FÜR DEN ZUGRIFF AUF MEHRERE NETZE
PROCEDE, SYSTEME ET CARTE A PUCE D'ACCES A UNE PLURALITE DE RESEAUX

(30) Priority: 27.07.2001 GB 0118406; 21.12.2001 GB 0130790
(43) Date of publication of application: 28.04.2004
(73) Proprietor: Vodafone Group PLC, Newbury Berkshire RG14 2FN (GB)
(72) Inventor: TRINH, Phu, Newbury, Berkshire RG14 6PA (GB); MAYES, Keith, Edward, Hungerford RG17 0LA (GB)
(74) Representative: Harries, Simon George
(86) International application number: PCT/GB2002/003260
(87) International publication number: WO 2003/013173

(56) References cited:
- WO-A-00/69201
- WO-A-01/10109
- GB-A- 2 315 387
- US-A- 6 070 067

## Description

### Field of the Invention

The invention relates to telecommunications systems and methods and smart cards for use therewith. Embodiments of the invention to be described in more detail below, by way of example only, are mobile telecommunications systems which use smart cards in the form of subscriber identity modules (SIMs) which carry identification and authenticating information by means of which a telecommunications network forming part of the system can identify a telecommunications terminal within the system and authorise it to function in the system. For example, a SIM may be personal to a particular individual, by means of which that individual can activate a telecommunications terminal (e.g. a telephone handset) and use it for telecommunications purposes within the system.

### Background Art

WO-A-00/69201 relates to a system for determining a "total call tariff" for a roaming subscriber. Charging data is exchanged between the home network and a roamed network to do this. A subscriber registers himself in the roamed network in a well known manner.

### Brief Summary of the Invention

According to a first aspect of the invention, there is provided a mobile telecommunications system as defined in claim 1.

According to a second aspect of the invention, there is provided a mobile telecommunications method as defined in claim 9.

Optional features of the invention are defined in the dependent claims.

### Brief Description of the Drawings

Telecommunications systems and methods embodying the invention, and SIM cards embodying the invention for use in such systems and methods, will now be described, by way of example only, with reference to the accompanying diagrammatic drawings, in which:
Figure 1 illustrates operations in one of the systems;
Figure 2 is a flow chart showing those operations.
Figure 3 is a simplified diagram of some of the operations taking place in the system being described; and
Figures 4 to 6 explain call routing in the systems being described.

### Detailed Description of Embodiments of the Invention

In mobile telecommunications systems such as of the GSM or UMTS (third generation or 3G) type, transmitting and receiving terminals (telephone handsets, for example) are provided with individual smart cards or SIM cards which are used to activate the terminals. In such a case, the SIM cards will be specific to the customers and will carry information particular to each customer such as the customer's IMSI (International Mobile Subscriber Identifier) together with authentication information and the customer's telephone number (MSISDN). Using the SIM card, the customer can activate their handset or, in general, any other suitable handset. The SIM card may also store other information such as the customer's list of memorised telephone numbers.

In each case, each SIM card will be specific to a particular network (the "home" network) - that is, it will have been issued under the control of the operator of that network and will be for use within that network. In addition, of course, the SIM card may permit roaming of the associated terminal into other, pre-recognised, networks. In known fashion, the network operator will order a SIM card (or, of course, a batch of such cards in practice) from a SIM supplier. The SIM supplier, who will be in the position of a trusted supplier to the network operator, will use information which it already holds to generate the SIM card bearing the necessary identification and authentication information and a particular IMSI. The SIM manufacturer will then supply the SIM card to a terminal manufacturer such as a manufacturer of telephone handsets. The SIM supplier will also advise the network operator of the data loaded onto the SIM card. In due course, the terminal will be supplied to a customer. At that stage, the network operator will activate the SIM card, making use of the information concerning the SIM cards already supplied to it by the SIM supplier.

The SIM card, and thus the terminal associated with it, are now active and can be used in the network.

As stated above, a SIM card in principle permits roaming of the associated terminal into other, pre-recognised, networks. Thus, a customer when present in such another, pre-recognised, network (that is, the network other than the customer's home network and called a visited network) can make and receive calls using the same SIM card (and, normally, the same terminal) as used in the home network. When the customer's terminal is activated in the visited network, the visited network recognizes the associated SIM card as being a SIM card registered with the particular home network and obtains the necessary details of the customer from the home network in order to be able to carry out the necessary authentication process for the customer. An incoming call for that particular customer from a third party is addressed to the customer by the third party using the customer's normal telephone number (MSISDN) and is received by the home network. The home network then directs the call to the appropriate visited network which then in turn passes it to the customer's handset. Similarly, such a roaming customer, wishing to make a call to a third party, addresses the call to that third party, using the third party's normal telephone number. The visited network, on receiving the call from the customer, then directs it to the third party. Because the visited network holds all the details of the customer, it can carry out the necessary authentication process and, in addition, it will direct its charges in respect of calls made by the customer to the customer's home network which will in due course bill the customer therefor.

Such a roaming process is relatively complex in that information concerning the customer or calls made to or from the customer may often have to be repeatedly routed between the home and visited networks resulting in additional costs for the network operators (which will be reflected in increased call charges for the customer), increased complexity and possibly increased call delays and failures. These disadvantages may be acceptable for short periods of time - for example, when the customer is visiting another country on a short business trip or short holiday. However, the disadvantages may be less acceptable when the customer is on an extended visit and it would be desirable to provide a system in which, in such circumstances, the customer could operate effectively as though the visited network were the customer's home network.

It would of course be possible to overcome the disadvantages mentioned above simply by issuing a new SIM card to a customer on such an extended visit, the SIM card being a SIM card suitable for the visited network. However, this would be logistically difficult in practice (often, the customer might give only very short notice of the intended visit) and, additionally, could have the result that useful information placed on the previous SIM card would be lost.

According to a feature of the invention now to be described, a SIM card registered with a particular network (its "home" network) can be re-registered with a different network (or with any one of several different networks) - which thus becomes its new home network. The networks with which the SIM card can be registered form a group of predetermined networks and may, for example, be networks in different countries all owned or controlled in common. In this way, therefore, a customer with such a SIM card, initially registered with a particular home network and intending to visit another of the networks on an extended visit, can have the SIM card immediately re-registered with the network to be visited - which thus becomes its new home network.

One way in which this can be achieved is shown in the Figures.

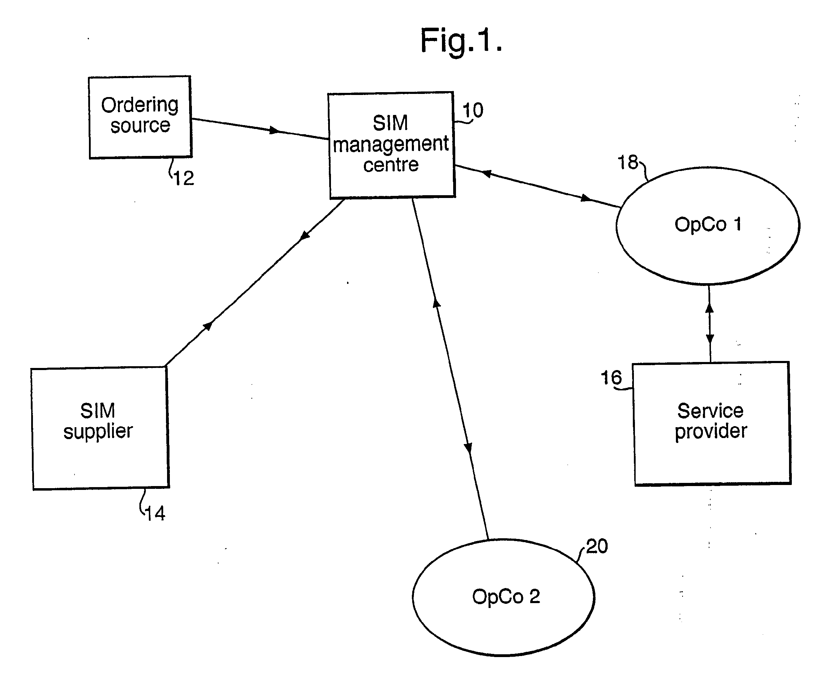

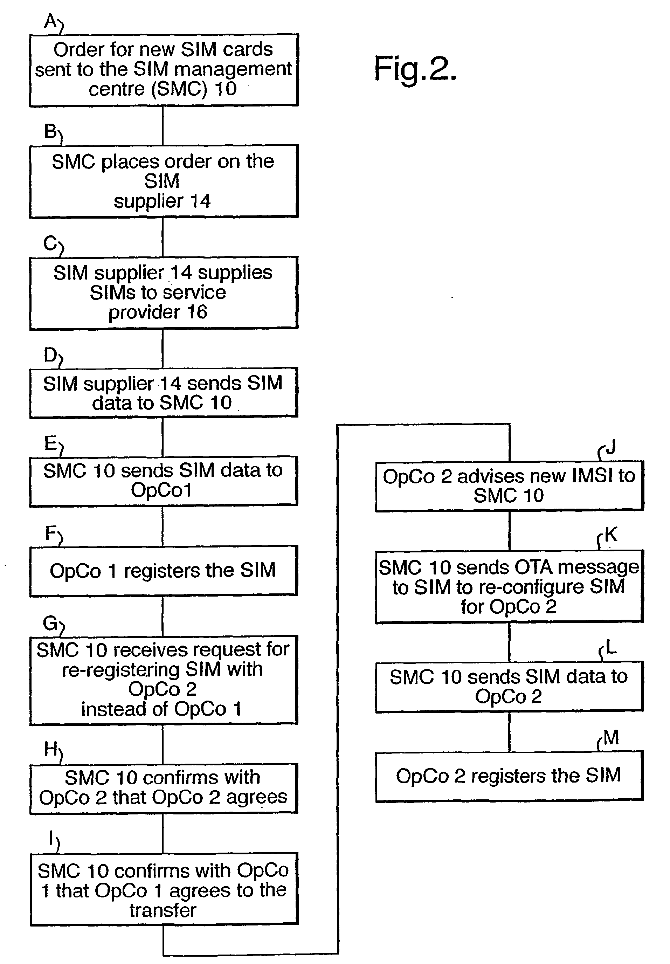

As shown in Figure 1, a SIM management centre 10 is provided. This can be located anywhere. For example, where the group of networks are all owned or controlled in common, the SIM management centre 10 can be located at the controlling entity. Orders for the supply of a new batch of SIM cards are received by the SIM management centre 10 from an ordering source 12 (Step A, Figure 2). Such a source might, for example, be any one of the group of networks. In response to such an order, the SIM management centre 10 places the order on a SIM supplier 14 (or on a particular one of several such suppliers) (Step B, Figure 2). The order will identify the particular network in the group of networks in which the SIM card is to be used initially (that is, the first home network).

The SIM card supplier 14 now manufactures the SIM cards, placing all the necessary information on them. This information will of course be relevant to the particular home network for which the SIM card is intended. The information will thus include the IMSI which identifies the SIM within that network) and also a record providing all the secret information specific to the operator of that particular network (secret keys, OTA transport key, parameters for the particular operator's algorithm and others) which is required for authenticating the SIM card in use; the SIM supplier will obtain this secret information from information which it already has and which, of course, it maintains in a secure fashion. In addition, a common SIM mask may be stored on the SIM card, for example a mask particular to the entity owning or controlling the networks.

In accordance with a particular feature of the invention, the SIM supplier also includes on the SIM card similar records for the operator-specific security secret information relating to all the other networks in the group. In other words, the SIM card includes a storage space containing multiple records relating to operator-specific secret information for each of the networks in the group. Additional records containing information for networks which may join the group in the future may also be provided. Each of these records is in principle separately activatable. Initially, however, only the record applicable to the operator of the network in which the SIM card is to be initially registered is activated.

The SIM card is now sent by the SIM supplier 14 to a service provider 16, retailing mobile telephone services (Step C). Details of the information which the SIM manufacturer has placed on the SIM card are sent back to the SIM management centre 10 (Step D). At this stage, the SIM card is not yet activated.

The SIM management centre 10 now passes the details of the particular SIM card to the operating company (OpCo 1) 18 of the network in which the SIM card is to be initially used (Step E). Thus, OpCo 1 receives the IMSI for the SIM card, and details of the relevant operator-specific secret information. This step thus corresponds to the step in the known process described above, where the SIM supplier supplies all this information, in relation to a newly manufactured SIM card, to the operating company. Preferably, the SIM management centre 10 supplies all this information to OpCo 1 in the same format as the operating company would receive this information direct from the SIM manufacturer in the known process.

When the SIM card has been initially allocated to a particular customer by the service provider and has been associated with a terminal (that is, with the customer's handset), the SIM card is now ready for activation. The activation process will be carried out by OpCo 1 using OTA transmissions in the usual way (Step F). The SIM card, and thus the associated handset, are now "live" in the network of OpCo 1 which is thus the home network for that SIM card.

It will now be assumed that the customer is proposing an extended visit to another one of the networks in the group of networks and wishes the SIM card to be registered with the different network ("visited network") as its home network. Thus, such a re-registering request may be generated by an operating company 20 ("OpCo 2"), being the operator of the visited network or it may be generated by OpCo 1. This re-registering request will of course normally originate from the customer. However the request originates, it is passed to the ordering source 12 and then sent to the SIM management centre 10 (Step G).

The SIM management centre 10 now confirms with OpCo 2 that OpCo 2 is prepared to become the home network of the SIM card (Step H). If this confirmation is received, the SIM management centre 10 then confirms that OpCo 1 is prepared to release the SIM card (Step I). This process may involve requesting confirmation from the customer that such release and transfer to OpCo 2 is agreed. Assuming that OpCo 1 confirms release, OpCo 2 informs the SIM management centre 10 of the new IMSI which the SIM card will now need (Step J).

The SIM management centre 10 now sends an OTA message to the SIM card, to enable it to be registered with OpCo 2 instead of OpCo 1 (Step K). This message would include the new IMSI for the SIM card and also a new local telephone number for use in the visited network, both of which will have been obtained from OpCo 2 (at step J). In addition, the OTA message will access the part of the SIM card storing the records mentioned above relating to the operator-specific secret information, and will activate the record specific to OpCo 2 and de-activate the records specific to OpCo 1.

The SIM management centre 10 will at this time hold all the necessary information relating to the SIM card - in the same way as it did initially when the card was manufactured by the SIM supplier 14 which supplied this information to the SIM management centre 10 (see step D). Thus, the SIM management centre 10 will hold the original information received from the SIM supplier concerning the SIM card and will now hold the new IMSI (obtained from OpCo 2) (see step J) and will also know the secret information relating to OpCo 2. Therefore, the SIM management centre 10 can now supply all this information to OpCo 2 (step L). Thus, the HLR of the visited network will be told the customer's MSISDN (which will not be changed) and will also be informed that the customer is an "extended visitor". The HLR of the visited network will also, of course, know the customer's new IMSI and local number.

Just as when this information was originally sent to OpCo 1 (step E), the information sent to OpCo 2 will be in the same general format as the format in which such information is received by operating networks from the SIM supplier in accordance with the known SIM activation process.

The SIM management centre 10 will also advise the HLR in the customer's home network (that is, the original home network) of the customer's new IMSI and new local number in the visited network.

When OpCo 2 now receives a request actually to activate the SIM card within the network of OpCo 2, it has all the necessary information with which to activate the SIM within that network, as its new home network, such as by OTA transmissions (step M).

Because the secret and authentication information relating to each of the networks in the group of networks is already stored on the SIM card, so that the secret information relating to the visited network merely has to be activated on the SIM card, there is optimum maintenance of security - because none of the secret information has to be transmitted to the SIM card and re-written onto it.

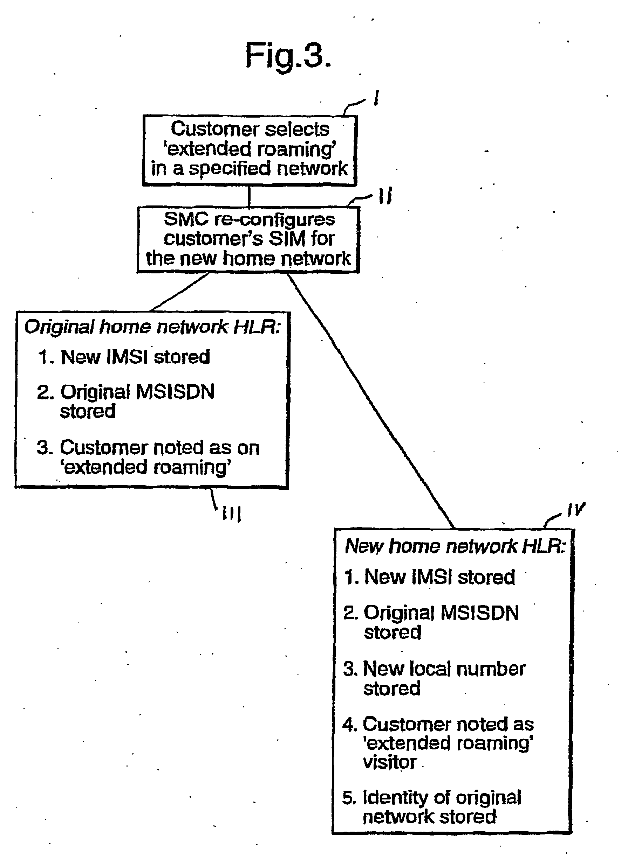

The foregoing steps are shown in simplified form in Figure 3. Thus, at step I, the customer sends a request for "extended roaming" into a particular visited network. This request may be sent to OpCo 1, the operator of the customer's current home network, but possibly to OpCo 2, the operator of the visited network - that is, the new home network. At step II, the SIM management centre 10 operates in the manner described in detail above to activate the record on the SIM card which is specific to OpCo 2 and to de-activate the record specific to OpCo 1.

The information stored in the HLR of the original home network and in the HLR of the visited network by the SIM management centre 10 is shown at III and IV respectively.

Because the customer's SIM card is now registered with the visited network as its new home network, the new home network can now generate its own authentication data for use in authenticating the SIM card (in conjunction with the secret data on the smart card) when the customer's terminal (using the SIM card) is activated in the new home network.

This contrasts with the situation during normal roaming - where the visited network has to refer back to the home network for the authentication data each time the terminal (using the SIM card) is activated in the visited network.

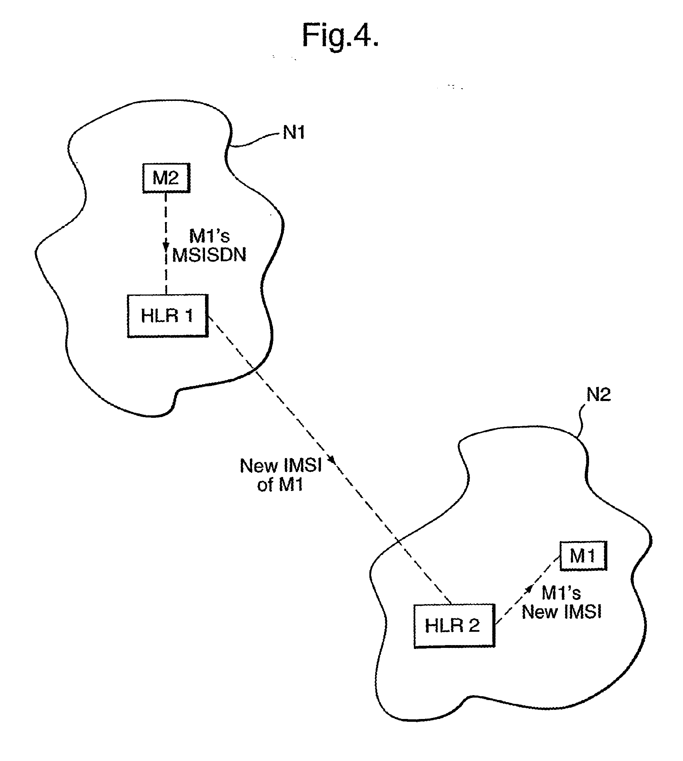

Figure 4 shows the customer (indicated at M1) whose original home network is network N1 but is now registered, on an "extended roaming" basis, with network N2 as its new home network. A third party (shown at M2) wishes to make a call to the customer M1 via network N1. M2 thus calls the customer M1 using the customer's original MSISDN which has not changed. HLR 1 in network N1 forwards the call to network N2 using customer M1's new IMSI number, and the call is forwarded to customer M1. via HLR 2 of network N2.

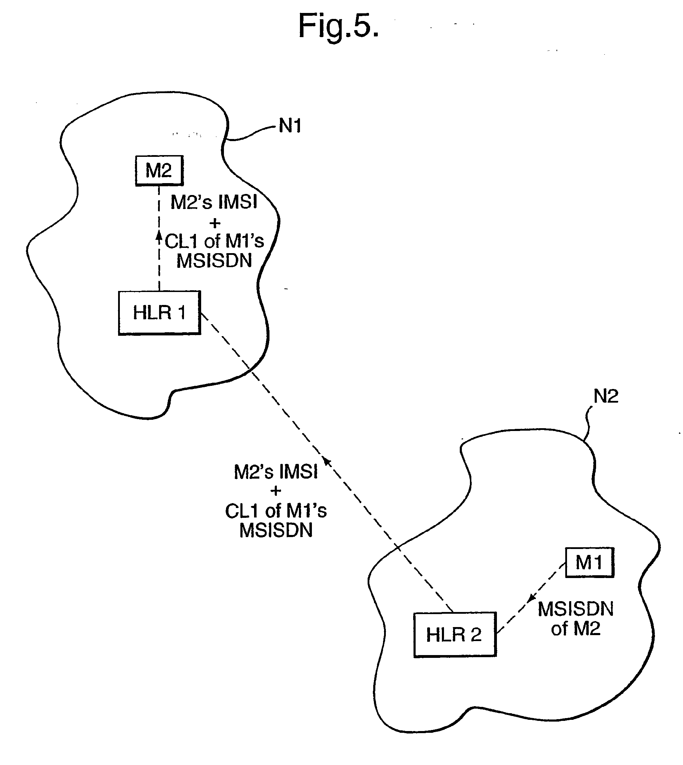

Figure 5 (in which items corresponding to those in Figure 4 are similarly referenced) illustrates the operations which take place when the customer M1 wishes to make a call to the third party M2 in network N1. Thus, the customer M1 will address the call to the third party M2 using M2's MSISDN. The call will be received initially by HLR 2 in the network N2. HLR 2 will recognise the local number of the customer M1 and will thus be aware that the customer is an "extended roaming customer". HLR2 will forward the call to HLR 1 of network N1 using the MSISDN of the third party M2, and HLR 1 will thus forward the call to M2 using M2's IMSI. However, when HLR 2 forwards the call from network N2, it will replace the CLI corresponding to the local number of M1 with the CLI corresponding to M1's MSISDN, using information already stored, of course, in HLR2. Thus, HLR 1 and the third party M2 will be able to use this CLI to confirm that the call has originated from customer M1.

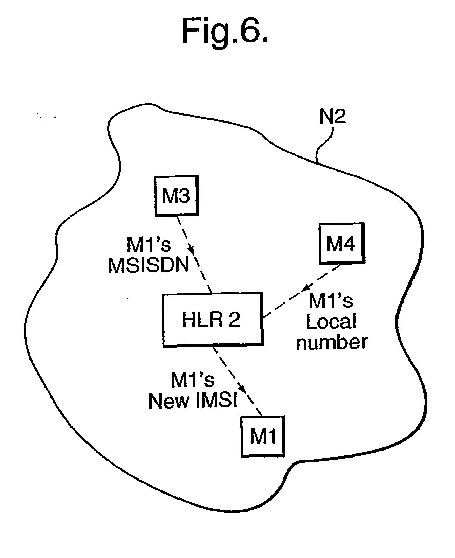

Figure 6 shows the customer M1 carrying out extended roaming in network N2. Also shown in Figure 6 are two third parties, M3 and M4, which are both registered with network N2 as their home network.

It is assumed that third party M3 wishes to make a call to the customer M1 but is unaware that customer M1 is now registered with network N2 as M1's new home network - and may in fact be unaware that M1 is located within network N2. M3 will thus call customer M1 using customer M1's MSISDN. HLR 2 will receive the call and will recognise (from the received MSISDN) that the call customer is in fact customer M1 which is now registered with network N2. The call will therefore be forwarded to customer M1 using customer M1's new IMSI.

The third party M4 is assumed to be aware that customer M1 is now registered with network N2 as its new home network and also aware of customer M1's local number. The third party M4 can thus direct calls to customer M1 using customer M1's local number. The call is received by HLR 2 which thus directs the call to customer M1 using the customer's new IMSI.

The manner in which customer M1 is charged for calls depends on whether the customer is a contract customer or a prepay customer. When customer M1 attempts to make or receive a call in the new home network, the network will determine whether the customer is a contract customer or a prepay customer (which can be determined from the information on the SIM card). If the customer is a contract customer, call records are generated by the new home network and then sent to the customer's original home network for onward billing to the customer.

If the customer is a prepay customer, then, in order to make and receive calls, the customer must purchase appropriate top-up credit of the type used within the new home network - in exactly the same way as any other prepay customer of that network.

Although it is advantageous to use a central SIM management centre 10, as described above, for managing the transfer of the SIM card between networks, this is not essential. Instead the necessary information could be carried out by the operating companies for the networks.

Although it is advantageous for the customer's SIM card to be issued with a local number when registered with the visited network as its new home network (thus effectively having two MSISDN's), because this may simplify the customer's use of the terminal in the new home network, this is not essential: the original MSISDN could be used as the sole MSISDN.

## Claims

1. A mobile telecommunications system, comprising a plurality of different predetermined networks (OpCo 1, OpCo 2, N1, N2); a plurality of terminals (M1, M2) for use in the system; a plurality of smart cards, each terminal being operable in a first one (OpCo 1, N1) of the networks in association with one of the smart cards when that smart card is registered with that network (OpCo 1, N1); registration means (10) for registering each smart card with said first one (OpCo 1, N1) of the networks as its home network, each smart card carrying secret information specific to the home network (OpCo 1, N1) with which the smart card is registered and by means of which that network (OpCo 1, N1) can authenticate the smart card and allow use of the terminal with which that smart card is associated in that network (OpCo 1, N1); and wherein each of said mobile terminals, in association with said one of the smart cards, is operable in at least a second one (OpCo 2, N2) of the networks as a visited network pursuant to an agreement between the visited network and the home network; **characterised in that** the registration means (10) is operable to temporarily de-register each smart card from the network with which it is registered as its home network (OpCo 1, N1) and to temporarily re-register each smart card with said visited network (OpCo 2, N2) as its new home network by the registration means (10) obtaining from said visited network (OpCo 2, N2) data including an International Mobile Subscriber Identifier - IMSI - particular to and for use with that network (OpCo 2, N2), transmitting said IMSI to the smart card, and activating the secret information relating to said visited network (OpCo 2, N2) when re-registering the smart card with that network (OpCo 2, N2) such that authentication of the smart card when its associated terminal (M1) is operative in the visited network (OpCo 2, N2) as its new home network is controlled by the visited network (OpCo 2, N2).

2. A system according to claim 1, in which charging under contract for calls made by the terminal. (M1) when the terminal is operative in the visited network (OpCo 2, N2) with the smart card registered with the visited network as its new home network is routed through the original home network (OpCo 1, N1).

3. A system according to claim 1, in which the terminal (M1) is a pre-pay terminal and payments for calls made by the terminal when operative in the visited network (OpCo 2, N2) with the smart card registered with the visited network as its new home network are made by purchase of credits effective within that network.

4. A system according to any preceding claim, in which the smart card carries respective secret information specific to both of the networks (OpCo 1, OpCo 2, N1, N2) for use by each network for authenticating the smart card in that network and to allow use of the terminal (M1, M2) with which that smart card is associated in that network, and in which the registration means activates the secret information relating to the visited network (OpCo 2, N2) when registering The smart card with that network as its new home network.

5. A system according to any preceding claim, in which the smart card includes means for storing a network identifying address which identifies the home network (OpCo1, N1) when registered with that network, and in which the registration means (10) includes means for transmitting a network identifying address particular to the visited network for storage on the smart card when registering the smart card with that network as its new home network

6. A system According to any preceding claim, in which the smart card includes means for storing a smart card identifying address which is used to identify the terminal (M1) with which the smart card is associated so as to enable communication to be established to and from that terminal.

7. A system according to claim 6, in which the registration means (10) transmits an additional smart card identifying address particular to the visited network (OpCo 2, N2) for storage on the smart card when registering the smart card with the visited network (OpCo 2, N2) as its new home network whereby calls may be established to the terminal (M1) with which the smart card is associated using either of the smart card identifying addresses when the smart card has been registered with the visited network (OpCo 2, N2) as its new home network.

8. A system according to any preceding claim, in which the networks (OpCo 1, OpCo 2, N1, N2) are GSM or UMTS networks and the smart cards are SIM cards for use therein.

9. A mobile telecommunications method for use with a plurality of different predetermined networks (OpCo 1, OpCo 2, N1, N2), a plurality of terminals (M1, M2) and a plurality of smart cards, each terminal being operable in a first one (OpCo 1, N1) of the networks in association with one of the smart cards when that smart card is registered with that network (OpCo 1, N1), the method including registering each smart card with said first one (OpCo 1, N1) of the networks as its home network, each smart card carrying secret information specific to the home network (OpCo 1, N1) with which the smart card is registered and by means of which that network (OpCo 1, N1) can authenticate the smart card and allow use of the terminal with which that smart card is associated in that network (OpCo 1, N1), and wherein each of said mobile terminals, in association with said one of the smart cards, is operable in at least second one (OpCo 2, N2) of the networks as a visited network pursuant to an agreement between the visited network and the home network; and **characterised by** temporarily de-registering each smart card from the network with which it is registered as its home network (OpCo 1, N1) and temporarily re-registering each smart card with said visited network (OpCo 2, N2) as its new home network by obtaining from said visited network (OpCo 2, N2) data including an International Mobile Subscriber Identifier - IMSI - particular to and for use with that network (OpCo 2, N2), transmitting said IMSI to the smart card, and activating the secret infomation relating to said visited network (Opco 2, N2) when re-registering the smart card with that network (OpCo 2, N2) such that authentication of the smart card when its associated terminal (M1) is operative in the visited network (OpCo 2, N2) as its new home network is controlled by the visited network (Opco 2, N2).

10. A method according to claim 9, in which charging under contract for calls made by the terminal (M1) when the terminal is operative in the visited network (OpCo 2, N2) with the smart card registered with the visited network (OpCo 2, N2) as its new home network is routed through the original home network (OpCo 1, N1).

11. A method according to claim 9, in which the terminal (M1) is a pre-pay terminal and payments for calls made by the terminal (M1) when operative in the visited network (OpCo 2, N2) with the smart card registered with the visited network (OpCo 2, N2) as its new home network are made by purchase of credits effective within that network.

12. A method according to any one of claims 9 to 11, in which the smart card carries respective secret information specific to both of the networks (OpCo 1, OpCo 2, N1, N2) for use by each network for authenticating the smart card in that network and to allow use of the terminal with which that smart card is associated in that network, in which the registration step activates the secret information relating to the visited network (OpCo 2, N2) when registering the smart card with that network as its new home network.

13. A method according to any one of claims 9 to 12, in which the smart card when registered with the home network (OpCo 1, N1) stores a network identifying address which identifies that network, and in which the registration means transmits a network identifying address particular to the visited network (OpCo 2, N2) for storage on the smart card when registering the smart card with that network as its new home network.

14. A method according to any one of claims 9 to 13, in which the smart card stores a smart card identifying address which is used to identify the terminal (M1) with which the smart card is associated so as to enable communication to be established to and from that terminal.

15. A method according to claim 14, in which the registration step transmits an additional smart card identifying address particular to the visited network (OpCo 2, N2) for storage on the smart card when registering the smart card with the visited network (OpCo 2, N2) as its new home network whereby calls may be established to the terminal (M1) with which the smart card is associated using either of the smart card identifying addresses when the smart card has been registered with the visited network (OpCo 2, N2) as its new home network.

16. A method according to any one of claims 9 to 15, in which the networks (OpCo 1, OpCo 2, N1, N2) are GSM or UMTS networks and the smart cards are SIM cards for use therein.

## Patentansprüche

1. Mobilfunksystem, das Folgendes umfasst: mehrere verschiedene vorgegebene Netze (OpCo 1, OpCo 2, N1, N2), mehrere Endgeräte (M1, M2) für die Verwendung in dem System, mehrere Chip-Karten, wobei jedes Endgerät in einem ersten (OpCo 1, N1) der Netze zusammen mit einer der Chip-Karten betrieben werden kann, wenn diese Chip-Karte bei diesem Netz (OpCo 1, N1) registriert ist, ein Registriermittel (10) für das Registrieren jeder Chip-Karte bei dem genannten ersten (OpCo 1, N1) der Netze als deren Heimatnetz, wobei jede Chip-Karte vertrauliche Informationen speziell für das Heimatnetz (OpCo 1, N1) enthält, bei dem sie registriert ist, mit deren Hilfe das Netz (OpCo 1, N1) die Chip-Karte authentifizieren und die Verwendung des Endgerätes zulassen kann, zu dem diese Chip-Karte in diesem Netz (OpCo 1, N1) gehört, und wobei jedes der genannten mobilen Endgeräte gemeinsam mit dieser genannten einen der Chip-Karten zumindest in einem zweiten (OpCo 2, N2) der Netze, das als Aufenthaltsnetz gilt, entsprechend einer Vereinbarung zwischen dem Aufenthaltsnetz und dem Heimatnetz betrieben werden kann, **dadurch gekennzeichnet, dass** das Registriermittel (10) jede Chip-Karte bei dem Netz, das als deren Heimatnetz (OpCo 1, N1) gilt und bei dem die Chip-Karte registriert ist, vorübergehend abmelden und jede Chip-Karte bei dem genannten Aufenthaltsnetz (OpCo 2, N2), das als deren neues Heimatnetz gilt, vorübergehend neu anmelden kann, indem das Registriermittel (10) von dem genannten Aufenthaltsnetz (OpCo 2, N2) für dieses Netz (OpCo 2, N2) spezifische und in diesem zu verwendende Daten abruft, zu denen eine internationale Mobilfunk-Teilnehmerkennung (IMSI - International Mobile Subscriber Identifier) gehört, die genannte IMSI zur Chip-Karte überträgt und die vertraulichen Informationen, die das genannte Aufenthaltsnetz (OpCo 2, N2) betreffen, aktiviert, wenn es die Chip-Karte bei diesem Netz (OpCo 2, N2) neu anmeldet, so dass die Authentifizierung der Chip-Karte von dem Aufenthaltsnetz (OpCo 2, N2) kontrolliert wird, wenn deren zugehöriges Endgerät (M1) in dem Aufenthaltsnetz (OpCo 2, N2), das als deren neues Heimatnetz gilt, betrieben wird.

2. System nach Anspruch 1, bei dem, wenn das Endgerät in dem Aufenthaltsnetz (OpCo 2, N2) mit der in dem Aufenthaltsnetz als deren neuem Heimatnetz registrierten Chip-Karte betrieben wird, das vertragsgemäße Berechnen von von dem Endgerät (M1) getätigten Anrufen über das ursprüngliche Heimatnetz (OpCo 1, N1) erfolgt.

3. System nach Anspruch 1, bei dem es sich bei dem Endgerät (M1) um ein Endgerät mit Vorvergebührung handelt und die von dem Endgerät getätigten Anrufe, wenn dieses in dem Aufenthaltsnetz (OpCo 2, N2) mit der in dem Aufenthaltsnetz als deren neuem Heimatnetz registrierten Chip-Karte betrieben wird, durch im Voraus erworbene Guthaben bezahlt werden, die in diesem Netz gültig sind.

4. System nach einem der vorhergehenden Ansprüche, bei dem die Chip-Karte jeweils speziell für die beiden Netze (OpCo 1, OpCo 2, N1, N2) vertrauliche Informationen enthält, mit deren Hilfe jedes Netz die Chip-Karte in diesem Netz authentifizieren und die Verwendung des Endgerätes (M1, M2) zulassen kann, zu dem diese Chip-Karte in diesem Netz gehört, und bei dem das Registriermittel die das Aufenthaltsnetz (OpCo 2, N2) betreffenden vertraulichen Informationen aktiviert, wenn es die Chip-Karte bei diesem Netz, das als deren neues Heimatnetz gilt, registriert.

5. System nach einem der vorhergehenden Ansprüche, bei dem die Chip-Karte ein Mittel zum Speichern einer Netzadresse aufweist, die das Heimatnetz (OpCo 1, N1) angibt, wenn sie bei diesem Netz registriert ist, und bei dem das Registriermittel (10) ein Mittel zum Übertragen einer für das Aufenthaltsnetz spezifischen Netzadresse aufweist, die auf der Chip-Karte gespeichert wird, wenn es die Chip-Karte bei diesem Netz, das als deren neues Heimatnetz gilt, registriert.

6. System nach einem der vorhergehenden Ansprüche, bei dem die Chip-Karte ein Mittel zum Speichern einer Chip-Kartenadresse aufweist, die dafür verwendet wird, das Endgerät (M1) zu identifizieren, zu dem die Chip-Karte gehört, damit eine Verbindung zu und von diesem Endgerät hergestellt werden kann.

7. System nach Anspruch 6, bei dem das Registriermittel (10) eine für das Aufenthaltsnetz (OpCo 2, N2) spezifische zusätzliche Chip-Kartenadresse überträgt, die auf der Chip-Karte gespeichert wird, wenn es diese bei dem Aufenthaltsnetz (OpCo 2, N2), das als deren neues Heimatnetz gilt, registriert, wodurch mit Hilfe einer der Chip-Kartenadressen Verbindungen zu dem Endgerät (M1) hergestellt werden können, zu dem die Chip-Karte gehört, wenn diese bei dem Aufenthaltsnetz (OpCo 2, N2), das als deren neues Heimatnetz gilt, registriert worden ist.

8. System nach einem der vorhergehenden Ansprüche, bei dem es sich bei den Netzen (OpCo 1, OpCo 2, N1, N2) um GSM-oder UMTS-Netze handelt und bei den Chip-Karten um darin verwendbare SIM-Karten.

9. Mobilfunkverfahren für die Verwendung mit mehreren verschiedenen vorgegebenen Netzen (OpCo 1, OpCo 2, N1, N2), mehreren Endgeräten (M1, M2) und mehreren Chip-Karten, wobei jedes Endgerät in einem ersten (OpCo 1, N1)der Netze zusammen mit einer Chip-Karte betrieben werden kann, wenn diese Chip-Karte bei diesem Netz (OpCo 1, N1) registriert ist, wobei das Verfahren das Registrieren jeder Chip-Karte bei dem genannten ersten (OpCo 1, N1) der Netze als deren Heimatnetz umfasst, wobei jede Chip-Karte vertrauliche Informationen speziell für das Heimatnetz (OpCo 1, N1), bei dem sie registriert ist, enthält, mit deren Hilfe das Netz (OpCo 1, N1) die Chip-Karte authentifizieren und die Verwendung des Endgerätes zulassen kann, zu dem diese Chip-Karte in diesem Netz (OpCo 1, N1) gehört, und wobei jedes der genannten mobilen Endgeräte gemeinsam mit der genannten einen Chip-Karte zumindest in einem zweiten Netz (OpCo 2, N2), das als Aufenthaltsnetz gilt, entsprechend einer Vereinbarung zwischen dem Aufenthaltsnetz und dem Heimatnetz betrieben werden kann, und
**gekennzeichnet durch** das vorübergehende Abmelden jeder Chip-Karte bei dem Netz, das als deren Heimatnetz (OpCo 1, N1) gilt und bei dem die Chip-Karte registriert ist, und das vorübergehende Neuanmelden jeder Chip-Karte bei dem genannten Aufenthaltsnetz (OpCo 2, N2), das als deren neues Heimatnetz gilt, indem von dem genannten Aufenthaltsnetz (OpCo 2, N2) für dieses Netz (OpCo 2, N2) spezifische und in diesem zu verwendende Daten abgerufen werden, zu denen eine internationale Mobilfunk-Teilnehmerkennung (IMSI - International Mobile Subscriber Identifier) gehört, die genannte IMSI zur Chip-Karte übertragen wird und die vertraulichen Informationen, die das genannte Aufenthaltsnetz (OpCo 2, N2) betreffen, aktiviert werden, wenn die Chip-Karte bei diesem Netz (OpCo 2, N2) neu angemeldet wird, so dass die Authentifizierung der Chip-Karte von dem Aufenthaltsnetz (OpCo 2, N2) kontrolliert wird, wenn deren zugehöriges Endgerät (M1) in dem Aufenthaltsnetz (OpCo 2, N2), das als deren neues Heimatnetz gilt, betrieben wird.

10. Verfahren nach Anspruch 9, bei dem, wenn das Endgerät in dem Aufenthaltsnetz (OpCo 2, N2) mit der in dem Aufenthaltsnetz (OpCo 2, N2) als deren neuem Heimatnetz registrierten Chip-Karte betrieben wird, das vertragsgemäße Berechnen von von dem Endgerät (M1) getätigten Anrufen über das ursprüngliche Heimatnetz (OpCo 1, N1) erfolgt.

11. Verfahren nach Anspruch 9, bei dem es sich bei dem Endgerät (M1) um ein Endgerät mit Vorvergebührung handelt und die von dem Endgerät (M1) getätigten Anrufe, wenn dieses in dem Aufenthaltsnetz (OpCo 2, N2) mit der in dem Aufenthaltsnetz (OpCo 2, N2) als deren neuem Heimatnetz registrierten Chip-Karte betrieben wird, durch im Voraus erworbene Guthaben bezahlt werden, die in diesem Netz gültig sind.

12. Verfahren nach einem der Ansprüche 9 bis 11, bei dem die Chip-Karte jeweils speziell für die beiden Netze (OpCo 1, OpCo 2, N1, N2) vertrauliche Informationen enthält, mit deren Hilfe jedes Netz die Chip-Karte in diesem Netz authentifizieren und die Verwendung des Endgerätes zulassen kann, zu dem diese Chip-Karte in diesem Netz gehört, wobei die Registrierung die das Aufenthaltsnetz (OpCo 2, N2) betreffenden vertraulichen Informationen aktiviert, wenn die Chip-Karte bei diesem Netz, das als deren neues Heimatnetz gilt, registriert wird.

13. Verfahren nach einem der Ansprüche 9 bis 12, bei dem die Chip-Karte, wenn sie bei dem Heimatnetz (OpCo 1, N1) registriert ist, eine Netzadresse speichert, die dieses Netz angibt, und bei dem das Registriermittel eine für das Aufenthaltsnetz (OpCo 2, N2) spezifische Netzadresse überträgt, die auf der Chip-Karte gespeichert wird, wenn die Chip-Karte bei diesem Netz, das als deren neues Heimatnetz gilt, registriert wird.

14. Verfahren nach einem der Ansprüche 9 bis 13, bei dem die Chip-Karte eine Chip-Kartenadresse speichert, die dafür verwendet wird, das Endgerät (M1) zu identifizieren, zu dem die Chip-Karte gehört, damit eine Verbindung zu und von diesem Endgerät hergestellt werden kann.

15. Verfahren nach Anspruch 14, bei dem bei der Registrierung eine für das Aufenthaltsnetz (OpCo 2, N2) spezifische zusätzliche Chip-Kartenadresse übertragen wird, die auf der Chip-Karte gespeichert wird, wenn diese bei dem Aufenthaltsnetz (OpCo 2, N2), das als deren neues Heimatnetz gilt, registriert wird, wodurch mit Hilfe einer der Chip-Kartenadressen Verbindungen zu dem Endgerät (M1) hergestellt werden können, zu dem die Chip-Karte gehört, wenn diese bei dem Aufenthaltsnetz (OpCo 2, N2), das als deren neues Heimatnetz gilt, registriert worden ist.

16. Verfahren nach einem der Ansprüche 9 bis 15, bei dem es sich bei den Netzen (OpCo 1, OpCo 2, N1, N2) um GSM-oder UMTS-Netze handelt und bei den Chip-Karten um darin verwendbare SIM-Karten.

## Revendications

1. Système de télécommunications mobiles, comportant une pluralité de différents réseaux prédéterminés (OpCo1, OpCo2, N1, N2) ; une pluralité de terminaux (M1, M2) destinés à être utilisés dans le système ; une pluralité de cartes à puce intelligentes, chaque terminal étant apte à opérer dans un premier réseau (OpCo1, N1) des réseaux en association avec l'une des cartes à puce intelligentes lorsque cette carte à puce intelligente est enregistrée auprès de ce réseau (OpCo1, N1) ; des moyens d'enregistrement (10) servant à enregistrer chaque carte à puce intelligente auprès dudit premier (OpCo1, N1) des réseaux pour le choisir comme son réseau de base, chaque carte à puce intelligente portant des informations secrètes qui sont propres au réseau de base (OpCo1, N1) auprès duquel la carte à puce intelligente est enregistrée et grâce auxquelles ce réseau (OpCo1, N1) peut authentifier la carte à puce intelligente et autoriser l'utilisation du terminal avec lequel cette carte à puce intelligente est associée dans ce réseau (OpCo1, N1); et cas dans lequel chacun desdits terminaux mobiles, en association avec ladite carte à puce intelligente parmi les cartes à puce intelligentes, est apte à opérer dans au moins un deuxième réseau (OpCo2, N2) parmi les réseaux en tant que réseau visité à la suite d'un accord entre le réseau visité et le réseau de base ; **caractérisé en ce que** les moyens d'enregistrement (10) sont aptes à opérer temporairement pour dés-enregistrer chaque carte à puce intelligente du réseau auprès duquel celle-ci est enregistrée comme étant son réseau de base (OpCo1, N1) et pour ré-enregistrer temporairement chaque carte à puce intelligente auprès dudit réseau visité (OpCo2, N2) comme étant son nouveau réseau de base en raison du fait que les moyens d'enregistrement (10) obtiennent, à partir dudit réseau visité (OpCo2, N2), des données incluant un IMSI - code identifiant d'abonné au réseau de téléphonie mobile international - qui est spécifique à ce réseau (OpCo2, N2) et est destiné à être utilisé avec ce réseau, transmettent ledit IMSI à la carte à puce intelligente, et activent les informations secrètes relatives audit réseau visité (OpCo2, N2) au moment du ré-enregistrement de la carte à puce intelligente auprès de ce réseau (OpCo2, N2) de sorte que la gestion de l'authentification de la carte à puce intelligente, quand son terminal associé (M1) est opérationnel dans le réseau visité (OpCo2, N2) comme son nouveau réseau de base, est assurée par le réseau visité (OpCo2, N2).

2. Système selon la revendication 1, l'acheminement de la facturation conclue en vertu du contrat pour les appels effectués par le terminal (M1) au moment où le terminal est opérationnel dans le réseau visité (OpCo2, N2) alors que la carte à puce intelligente est enregistrée auprès du réseau visité comme étant son nouveau réseau de base, est assuré par l'intermédiaire du réseau de base initial (OpCo1, N1).

3. Système selon la revendication 1, le terminal (M1) étant un terminal de prépaiement, et les paiements pour les appels effectués par le terminal au moment où il est opérationnel dans le réseau visité (OpCo2, N2) alors que la carte à puce intelligente est enregistrée auprès du réseau visité comme étant son nouveau réseau de base, sont réalisés grâce à l'achat de crédits qui sont valides au sein de ce réseau.

4. Système selon l'une quelconque des revendications précédentes, la carte à puce intelligente portant des informations secrètes respectives propres à l'un et à l'autre des réseaux (OpCo1, OpCo2, N1, N2) destinées à être utilisées par chaque réseau afin d'authentifier la carte à puce intelligente présente dans ce réseau et d'autoriser l'utilisation du terminal (M1, M2) avec lequel cette carte à puce intelligente est associée dans ce réseau, et cas dans lequel les moyens d'enregistrement activent les informations secrètes relatives au réseau visité (OpCo2, N2) au moment de l'enregistrement de la carte à puce intelligente auprès de ce réseau comme étant son nouveau réseau de base.

5. Système selon l'une quelconque des revendications précédentes, la carte à puce intelligente incluant des moyens pour stocker une adresse identifiante de réseau qui permet d'identifier le réseau de base (OpCo1, N1) quand elle est enregistrée auprès de ce réseau, et les moyens d'enregistrement (10) incluant des moyens pour transmettre une adresse identifiante de réseau propre au réseau visité à des fins de stockage sur la carte à puce intelligente au moment de l'enregistrement de la carte à puce intelligente auprès de ce réseau comme étant son nouveau réseau de base.

6. Système selon l'une quelconque des revendications précédentes, la carte à puce intelligente incluant des moyens pour stocker une adresse identifiante de carte à puce intelligente qui est utilisée pour identifier le terminal (M1) avec lequel la carte à puce intelligente est associée de sorte à autoriser l'établissement de communications vers ce terminal et à partir de ce terminal.

7. Système selon la revendication 6, les moyens d'enregistrement (10) assurant la transmission d'une adresse identifiante supplémentaire de carte à puce intelligente propre au réseau visité (OpCo2, N2) à des fins de stockage sur la carte à puce intelligente au moment de l'enregistrement de la carte à puce intelligente auprès du réseau visité (OpCo2, N2) comme étant son nouveau réseau de base, cas dans lequel des appels peuvent être établis en direction du terminal (M1) avec lequel la carte à puce intelligente est associée grâce à l'utilisation de l'une ou de l'autre des adresses identifiantes de carte à puce intelligente lorsque la carte à puce intelligente a été enregistrée auprès du réseau visité (OpCo2, N2) comme étant son nouveau réseau de base.

8. Système selon l'une quelconque des revendications précédentes, les réseaux (OpCo1, OpCo2, N1, N2) étant des réseaux GSM ou UMTS et les cartes à puce intelligentes étant des cartes SIM destinées à être utilisées dans ces réseaux.

9. Procédé de télécommunications mobiles conçu pour être utilisé avec une pluralité de différents réseaux prédéterminés (OpCo1, OpCo2, N1, N2), une pluralité de terminaux (M1, M2) et une pluralité de cartes à puce intelligentes, chaque terminal étant apte à opérer dans un premier réseau (OpCo1, N1) des réseaux en association avec l'une des cartes à puce intelligentes lorsque cette carte à puce intelligente est enregistrée auprès de ce réseau (OpCo1, N1), le procédé incluant l'opération consistant à enregistrer chaque carte à puce intelligente auprès dudit premier (OpCo1, N1) des réseaux pour le choisir comme son réseau de base, chaque carte à puce intelligente portant des informations secrètes qui sont propres au réseau de base (OpCo1, N1) auprès duquel la carte à puce intelligente est enregistrée et grâce auxquelles ce réseau (OpCo1, N1) peut authentifier la carte à puce intelligente et autoriser l'utilisation du terminal avec lequel cette carte à puce intelligente est associée dans ce réseau (OpCo1, N1), et cas dans lequel chacun desdits terminaux mobiles, en association avec ladite carte à puce intelligente parmi les cartes à puce intelligentes, est apte à opérer dans au moins un deuxième réseau (OpCo2, N2) parmi les réseaux en tant que réseau visité à la suite d'un accord entre le réseau visité et le réseau de base ; et **caractérisé par** l'opération consistant à dés-enregistrer temporairement chaque carte à puce intelligente du réseau auprès duquel celle-ci est enregistrée comme étant son réseau de base (OpCo1, N1) et à ré-enregistrer temporairement chaque carte à puce intelligente auprès dudit réseau visité (OpCo2, N2) comme étant son nouveau réseau de base grâce à l'obtention, à partir dudit réseau visité (OpCo2, N2), de données incluant un IMSI - code identifiant d'abonné au réseau de téléphonie mobile international - qui est spécifique à ce réseau (OpCo2, N2) et est destiné à être utilisé avec ce réseau, à la transmission dudit IMSI à la carte à puce intelligente, et à l'activation des informations secrètes relatives audit réseau visité (OpCo2, N2) au moment du ré-enregistrement de la carte à puce intelligente auprès de ce réseau (OpCo2, N2) de sorte que la gestion de l'authentification de la carte à puce intelligente, quand son terminal associé (M1) est opérationnel dans le réseau visité (OpCo2, N2) comme son nouveau réseau de base, est assurée par le réseau visité (OpCo2, N2).

10. Procédé selon la revendication 9, l'acheminement de la facturation conclue en vertu du contrat pour les appels effectués par le terminal (M1) au moment où le terminal est opérationnel dans le réseau visité (OpCo2, N2) alors que la carte à puce intelligente est enregistrée auprès du réseau visité (OpCo2, N2) comme étant son nouveau réseau de base, est assuré par l'intermédiaire du réseau de base initial (OpCo1, N1).

11. Procédé selon la revendication 9, le terminal (M1) étant un terminal de prépaiement, et les paiements pour les appels effectués par le terminal (M1) au moment où il est opérationnel dans le réseau visité (OpCo2, N2) alors que la carte à puce intelligente est enregistrée auprès du réseau visité (OpCo2, N2) comme étant son nouveau réseau de base, sont réalisés grâce à l'achat de crédits qui sont valides au sein de ce réseau.

12. Procédé selon l'une quelconque des revendications 9 à 11, la carte à puce intelligente portant des informations secrètes respectives propres à l'un et à l'autre des réseaux (OpCo1, OpCo2, N1, N2) destinées à être utilisées par chaque réseau afin d'authentifier la carte à puce intelligente présente dans ce réseau et d'autoriser l'utilisation du terminal avec lequel cette carte à puce intelligente est associée dans ce réseau, et cas dans lequel l'étape d'enregistrement active les informations secrètes relatives au réseau visité (OpCo2, N2) au moment de l'enregistrement de la carte à puce intelligente auprès de ce réseau comme étant son nouveau réseau de base.

13. Procédé selon l'une quelconque des revendications 9 à 12, la carte à puce intelligente quand elle est enregistrée auprès du réseau de base (OpCo1, N1) assurant le stockage d'une adresse identifiante de réseau qui permet d'identifier ce réseau, et les moyens d'enregistrement assurant la transmission d'une adresse identifiante de réseau propre au réseau visité (OpCo2, N2) à des fins de stockage sur la carte à puce intelligente au moment de l'enregistrement de la carte à puce intelligente auprès de ce réseau comme étant son nouveau réseau de base.

14. Procédé selon l'une quelconque des revendications 9 à 13, la carte à puce intelligente assurant le stockage d'une adresse identifiante de carte à puce intelligente qui est utilisée pour identifier le terminal (M1) avec lequel la carte à puce intelligente est associée de sorte à autoriser l'établissement de communications vers ce terminal et à partir de ce terminal.

15. Procédé selon la revendication 14, l'étape d'enregistrement assurant la transmission d'une adresse identifiante supplémentaire de carte à puce intelligente propre au réseau visité (OpCo2, N2) à des fins de stockage sur la carte à puce intelligente au moment de l'enregistrement de la carte à puce intelligente auprès du réseau visité (OpCo2, N2) comme étant son nouveau réseau de base, cas dans lequel des appels peuvent être établis en direction du terminal (M1) avec lequel la carte à puce intelligente est associée grâce à l'utilisation de l'une ou de l'autre des adresses identifiantes de carte à puce intelligente lorsque la carte à puce intelligente a été enregistrée auprès du réseau visité (OpCo2, N2) comme étant son nouveau réseau de base.

16. Procédé selon l'une quelconque des revendications 9 à 15, les réseaux (OpCo1, OpCo2, N1, N2) étant des réseaux GSM ou UMTS et les cartes à puce intelligentes étant des cartes SIM destinées à être utilisées dans ces réseaux.
